# EUROPEAN PATENT APPLICATION

(11) **EP 2 653 777 A1**
(43) Date of publication of application: **23.10.2013**
(21) Application number: 12176230.6
(22) Date of filing: 12.07.2012
(51) Int. Cl.: F21V 8/00

(54) **Lighting device and cove lighting module using the same**

(30) Priority: 16.04.2012 TW 101113492
(71) Applicant: Radiant Opto-Electronics Corporation, Kaohsiung (TW)
(72) Inventor: Wu, Yi-Tsuo, Kaohsiung (TW); Teng, Yu-Yuan, Kaohsiung (TW)
(74) Representative: Lang, Christian

(57) **Abstract**

A lighting device and a cove lighting module are provided. The lighting device includes a shell body, at least one light emitting diode element, and at least one light guide plate. The light emitting diode element and the light guide plate are disposed in the shell body. The light guide plate is disposed adjacent to the light emitting diode element to enable light emitted by the light emitting diode element to enter the light guide plate through a light incident surface of the light guide plate and to exit from the light guide plate through a light emitting surface of the light guide plate. The cove lighting module includes a light-receiving object and the lighting device, wherein the light-receiving object has an opaque surface. In the cove lighting module, the light exiting from the light guide plate is directly emitted to the opaque surface of the light-receiving object.

## Description

### Related Applications

This application claims the benefits of Taiwan Patent Application No. 101113492, filed April 16, 2012, the contents of which are herein incorporated by reference in its entirety.

### BACKGROUND

### Field of Invention

The present invention relates to a lighting device and a cove lighting module using the lighting device, and more particularly, to a lighting device using light emitting diodes (LEDs) as light sources and a cove lighting module using the lighting device.

### Description of Related Art

In a common building, lamps are generally mounted on a ceiling to illuminate indoor space of the building. However, because direct lighting is very harsh to a user's eyes, the user's eyes may get tired easily. To overcome the disadvantage of the direct lighting, indirect lighting is presented to provide illumination for the building.

The indirect lighting is to use a cove lighting module to emit light onto a ceiling of the building, and then the light is reflected by the ceiling to provide illumination for the building. The indirect lighting may soften the light from the lighting device so as to overcome the disadvantage of the direct lighting, and meanwhile to make the indoor space with better atmosphere. Therefore, the indirect lighting has been increasingly applied in modern buildings.

Because the indirect lighting provides soft light via a light-receiving object (for example, a ceiling of a building), the cove lighting module used therein requires more light sources to provide sufficient light intensities to illuminate the indoor space of the building. In other words, the indirect lighting requires higher cost and more electricity power for providing sufficient light intensities.

Therefore, there is a need to provide a lighting device and a cove lighting module with lower cost and power consumption for lowering the cost and power consumption of the indirect lighting.

### SUMMARY

An aspect of the present invention is to provide a lighting device and a cove lighting module using the lighting device. The lighting device and the cove lighting module use light emitting diodes (LEDs) as light sources, thereby enabling the lighting device and the cove lighting module to provide sufficient light intensities with less power consumption.

According to an embodiment of the present invention, the lighting device includes a shell body, at least one light emitting diode element, and at least one light guide plate. The light emitting diode element and the light guide plate are disposed in the shell body. The light guide plate is disposed adjacent to the light emitting diode element to enable light emitted by the light emitting diode element to enter the light guide plate through a light incident surface of the light guide plate and to exit from the light guide plate through a light emitting surface of the light guide plate, thereby forming an angle range with higher light intensities corresponding to a user-desirable light projected region.

According to another embodiment of the present invention, the lighting device includes a shell body, at least one light emitting diode element, at least one light guide plate, and at least one reflective plate. The light guide plate is disposed adjacent to the light emitting diode element to enable light emitted by the light emitting diode element to enter the light guide plate through a light incident surface of the light guide plate and to exit from the light guide plate through a light emitting surface of the light guide plate, thereby forming an angle range with higher light intensities corresponding to a user-desirable light projected region.

According to further another embodiment of the present invention, the cove lighting module includes a light-receiving object and a lighting device. The light-receiving object has an opaque surface. The lighting device includes a shell body, at least one light emitting diode element, and at least one light guide plate. The light emitting diode element and the light guide plate are disposed in the shell body. The light guide plate is disposed adjacent to the light emitting diode element to enable light emitted by the light emitting diode element to enter the light guide plate through a light incident surface of the light guide plate, and to exit from the light guide plate through a light emitting surface of the light guide plate, thereby forming an angle range with higher light intensities corresponding to a user-desirable light projected region. The light leaving the light guide plate directly irradiates to the opaque surface of the light-receiving object.

Base on the above description, the lighting device and the cove lighting module of the present invention use LEDs as light sources, and the angle range with higher light intensities is corresponding to the region where a user desired to project the light, so that the lighting device and the cove lighting module may consume less power to provide sufficient light intensities. Further, in the embodiments of the present invention, the lighting device and the cove lighting module do not need to use additional optical films (such as a brightness enhancement film (BEF)), thus having lower cost.

### BRIEF DESCRIPTION OF THE DRAWINGS

The invention can be more fully understood by reading the following detailed description of the embodiment, with reference made to the accompanying drawings as follows:
Fig. 1 is a schematic diagram showing a structure of a cove lighting module in accordance with an embodiment of the present invention;
Figs. 1a-1b are schematic diagrams showing structures of cove lighting modules in accordance with embodiments of the present invention;
Fig. 2 is a schematic diagram showing a side structure of the lighting device in accordance with the embodiment of the present invention;
Fig. 2a is a schematic diagram showing a side structure of the light guide plate in accordance with the embodiment of the present invention;
Fig. 2b is a diagram showing distribution of intensity of the light emitted by the lighting device in accordance with the embodiment of the present invention; and
Fig. 3 is a perspective diagram showing a side structure of a lighting device in accordance with the embodiment of the present invention.

### DETAILED DESCRIPTION

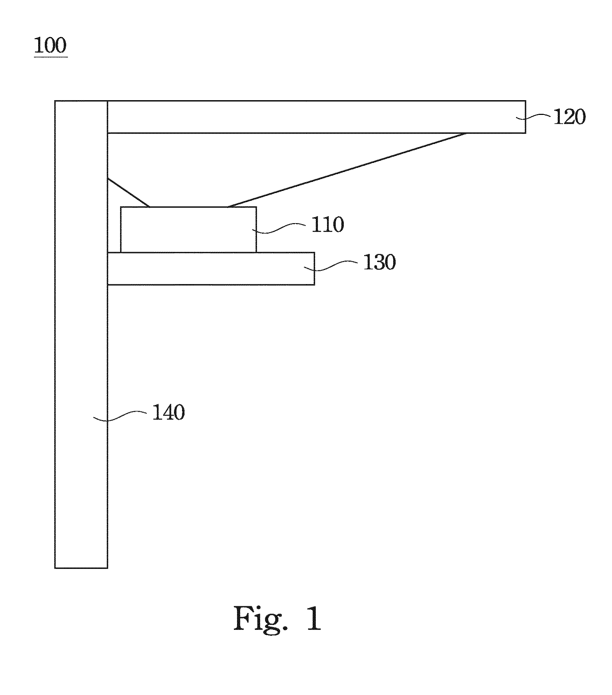

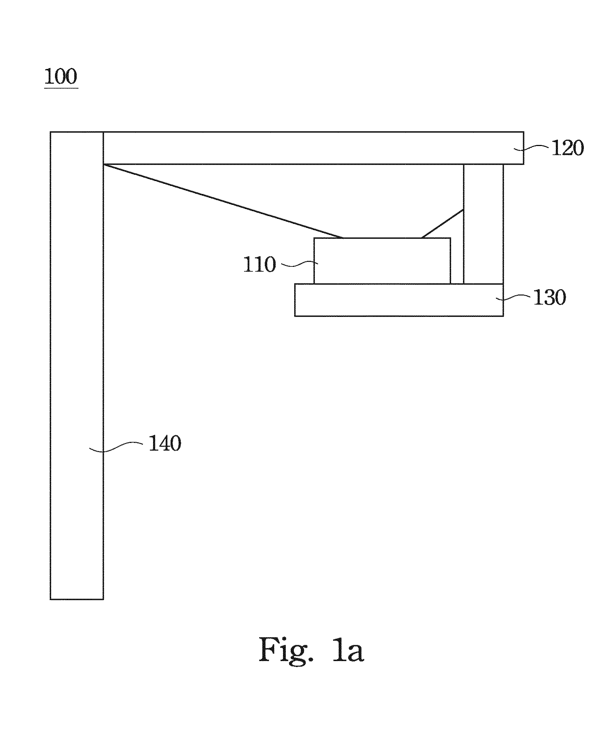

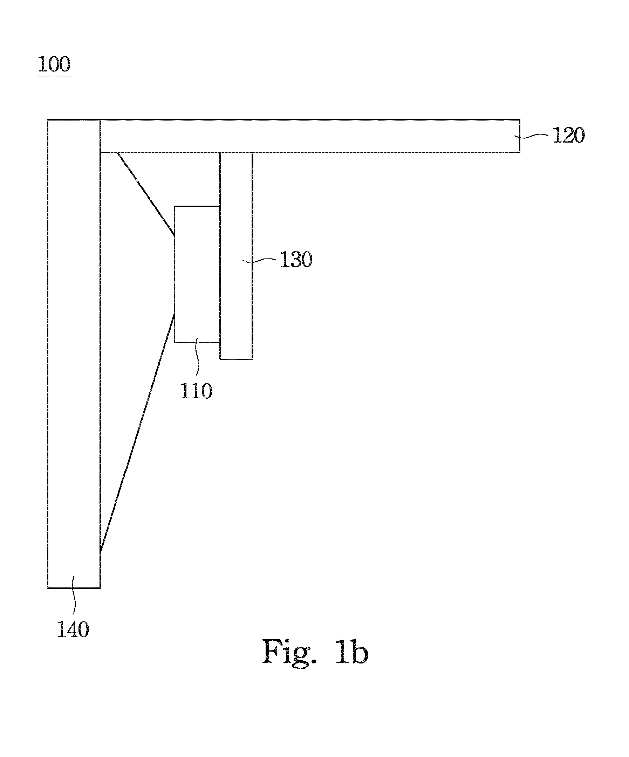

Referring to Fig. 1, Fig. 1 is a schematic diagram showing a structure of a cove lighting module 100 in accordance with an embodiment of the present invention. The cove lighting module 100 includes a lighting device 110, a light-receiving object 120, and a support member 130. The light-receiving object 120 has an opaque surface, or the material of the light-receiving object 120 is opaque material. In other words, the surface of the light-receiving object 120 is formed from fully reflective material or partially reflective material. The lighting device 110 is disposed on the support member 130, and project light onto the opaque surface of the light-receiving object 120, to provide illumination for indoor space of a building. In this embodiment, the light-receiving object 120 is a ceiling of the building, and the lighting device 110 is mounted on a sidewall 140 of the building through the support member 130, but the embodiments of the present invention are not limited thereto. In one embodiment, the lighting device 110 can be mounted on the ceiling of the building through the support member 130 to project light onto the ceiling of the building, as shown in Fig. 1 a. In another embodiment, the lighting device 110 is mounted on the ceiling of the building through the support member 130 to project light onto the sidewall of the building, as shown in Fig. 1 b.

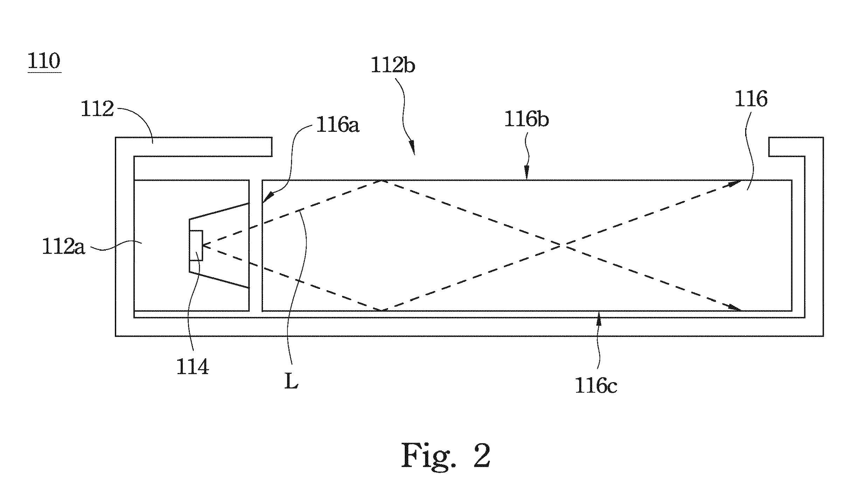

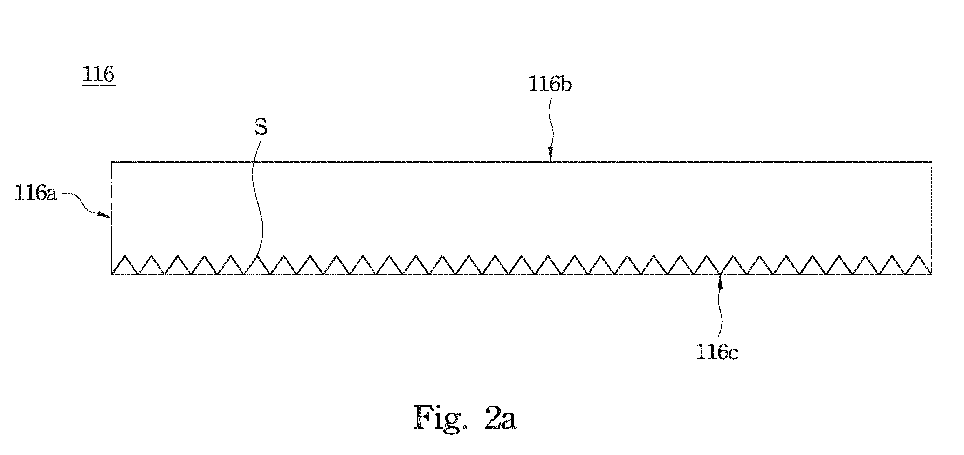

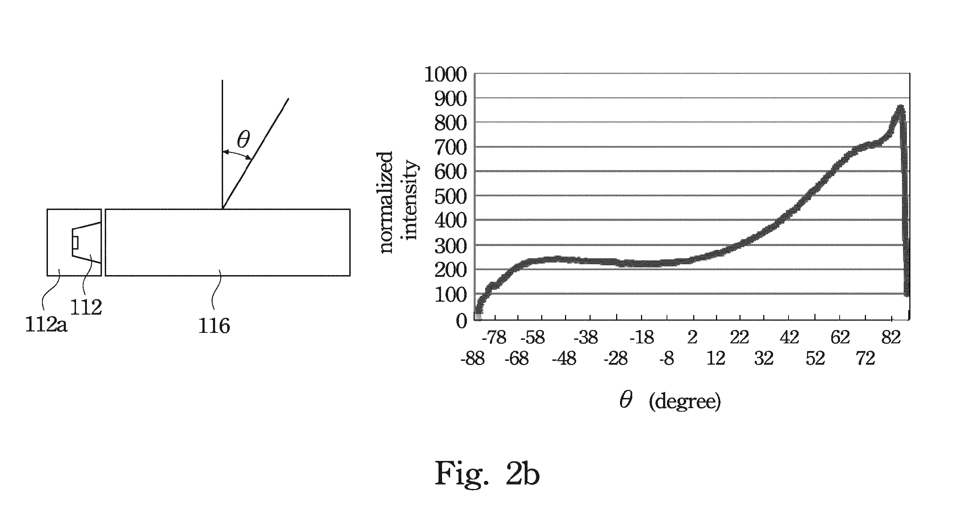

Referring to Fig. 2, Fig.2 is a schematic diagram showing a side structure of the lighting device 110 in accordance with the embodiment of the present invention. The lighting device 110 includes a shell body 112, a light emitting diode (LED) element 114 and a light guide plate 116. The shell body 112 has a light-source-receiving portion 112a and a light-emitting window 112b. The light-source-receiving portion 112a is used to receive the LED element 114, and the light-transmitting window 112b is used to provide a path for light emission. The light guide plate 116 is disposed adjacent to the LED element 114 to enable the light L emitted by the LED element 114 enter the light guide plate 116 through a light incident surface 116a of the light guide plate 116. The light L in the light guide plate 116 is guided by the structure of the light guide plate 116 to exit from the light guide plate 116 through a light emitting surface 116b of the light guide plate 116. The light L exiting from the light guide plate 116 emits out of the shell body 112 through the light-transmitting window 112b. In this embodiment, a refractive index of the guide plate 116 is greater than 1, and the light guide plate 116 is formed from transparent material having a transmittance greater than 0.7, but the embodiments of the present invention are not limited thereto.

Referring to Fig. 2a, Fig. 2a is a schematic diagram showing a side structure of the light guide plate 116 in accordance with the embodiment of the present invention. The light guide plate 116 of this embodiment has a reflective surface 116c. The reflective surface 116c is opposite to the light-emitting surface 116b. The reflective surface 116c has a plurality of microstructures S. The microstructures S are used to reflect the light L emitted to the reflective surface 116c to decrease the light L emitted out of the light guide plate 116 through the reflective surface 116c. In this embodiment, the microstructure S is a convex structure having a size smaller than 500 um², but the embodiments of the present invention are not limited thereto. In other embodiments of the present invention, the microstructure is a concave structure and the size thereof can be varied in accordance with demands of the user.

In addition, in the light guide plate 166 of this embodiment, only the surface opposite to the light-emitting surface 116b of the light guide plate 116 has the microstructures S, but in other embodiments of the present invention, other surfaces of the light guide plate 116 may have the microstructures S.

Referring to Fig. 2b, Fig. 2b is a schematic diagram showing distribution of intensity of the light emitted by the lighting device 110 in accordance with the embodiment of the present invention. In the embodiments of the present invention, light from the lighting device 110 directly irradiates onto the light-receiving object.120. In other words, after exiting from the light guide plate 116, the light L directly irradiates onto the light-receiving object 120 without passing through any object (for example, a BEF). Because the lighting device 110 does not use additional optical films, the emitting direction of the light emitted by the lighting device 110 is not orthogonal to the surface of the lighting device 100 (for example, the light-transmitting window 112b), and not symmetrical with respect to the surface of the lighting device 110. For example, the light emitted by the lighting device 110 of this embodiment has highest intensity within an angle θ at least 45 degrees, wherein the angle θ represents an emitting angle of light with peak intensity emitted by each of smaller regions (or refer to pixels) of the light guide plate 116. In other words, the angle θ is an angle between a main light emitting direction and a normal of the light emitting surface 116b.

In the cove light module 100, an angle range with highest light intensities (for example, the angle range is θ ≧ 45 ) is corresponding to a user-desirable light projected region, so that the illumination efficiency of the light emitted by the cove lighting module 100 is increased, accordingly.

It can be understood from above descriptions that the lighting device 110 uses the combination the LEDs and the light guide plate as light sources, and the angle range with higher light intensities is corresponding to a user-desirable light projected region, so that the cove lighting module 100 can consume less power to provide sufficient illumination. Further, the lighting device 110 doest not use additional optical films, and thus the light L emitting from the LED element is directly projected onto the light-receiving object after exiting from the light guide plate 116 without passing through any optical film. Therefore, the cove lighting module 100 has lower cost.

It is noted that the lighting device of this embodiment may use other optical device to increase the illumination efficiency of the light L. However, in other embodiments of the present invention, the lighting device 110 may only include the shell body 112, the LED element 114, and the light guide plate 116, and no other optical devices are included.

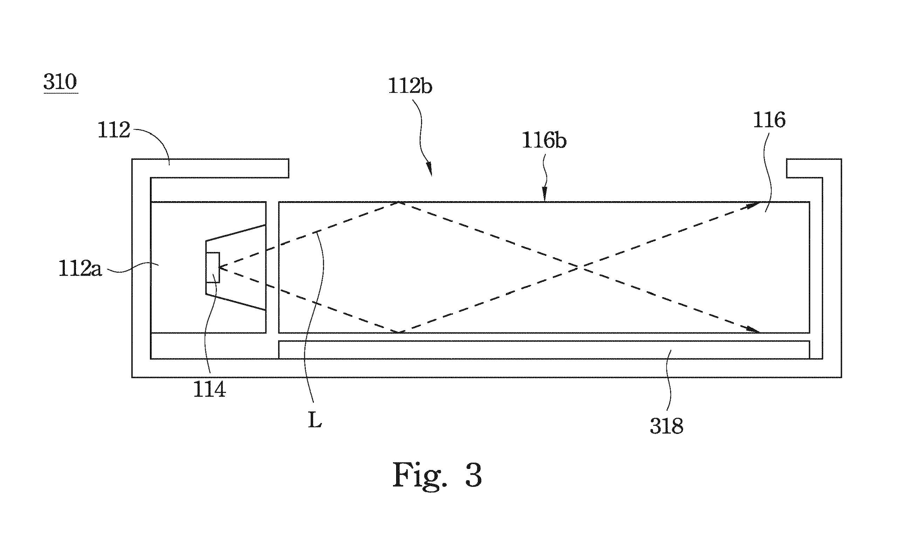

Referring to Fig. 3, Fig. 3 is a schematic diagram showing a side structure of a lighting device 310 in accordance with the embodiment of the present invention. The lighting device 310 is similar to the lighting device 110, but the difference is in that the lighting device 310 further includes a reflective plate 318. The reflective plate 318 is disposed adjacent to the light guide plate 116, thereby reflecting the light L emitting from the LED element 114 back to the light guide plate 116. In this embodiment, the reflective plate 318 is disposed under the light guide plate 116, and thus the light L emitting from the lower portion of the light guide plate 116 can be reflected back to the light guide plate 116, thereby increasing the illumination efficiency of the light L from the LED element 114.

In this embodiment, the reflection plate 318 is disposed under the light guide plate 116, but the embodiments of the present invention are not limited thereto. In other embodiments of the present invention, the reflective plate 318 can disposed on the side surface of the light guide plate 116, so that the illumination efficiency of the light L from the LED element 114 is increased.

In addition, it is noted that, in other embodiments, a reflective layer can be coated on an inner surface of the shell body 112 of the lighting device 310 to implement the function of the reflective plate 318.

It can be known from the above descriptions that the lighting device 310 uses the reflective plate 318 to increase the illumination efficiency of the light L from the LED element 114 to further decrease the power consumption of the lighting device.

Although the present invention has been disclosed with reference to the above embodiments, these embodiments are not intended to limit the present invention. It will be apparent to those skilled in the art that various modifications and variations can be made without departing from the scope or spirit of the present invention. Therefore, the scope of the present invention shall be defined by the appended claims.

## Claims

1. A lighting device comprising:
a shell body;
at least one light emitting diode (LED) element disposed in the shell body; and
at least one light guide plate disposed in the shell body, wherein the at least one light guide plate is disposed adjacent to the at least one LED element, thereby enabling light emitted by the at least one LED element to enter the light guide plate through a light incident surface of the light guide plate and to exit from the light guide plate through a light emitting surface of the light guide plate.

2. The lighting device of claim 1, wherein a refractive index of the at least one light guide plate is greater than 1, and the at least one light guide plate is formed from transparent material having a transmittance greater than 0.7.

3. The lighting device of claim 1, wherein an angle between a direction of a main emitting light and a normal of the light emitting surface of the light guide plate is equal to at least 45 degrees, and the main emitting light is corresponding to a region where a user desired to project the main emitting light.

4. The lighting device of claim 1, further comprising at least one reflective plate, wherein the at least one reflective plate is disposed adjacent to the at least one light guide plate to reflect the light emitted by the at least one light emitting diode element back to the at least one light guide plate.

5. The lighting device of claim 1, wherein the at least one light guide plate has a reflective surface opposite to the light emitting surface, and the reflective surface has a plurality of microstructures, and each of the micro structures is a concave structure or a convex structure, and a size of each of the microstructures is smaller than 500 um².

6. A cove lighting module comprising:
a light-receiving object having an opaque surface; and
a lighting device comprising:
a shell body;
at least one light emitting diode element disposed in the shell body; and
at least one light guide plate disposed in the shell body and having light incident surface and a light emitting surface, wherein the at least one light guide plate is disposed adjacent to the at least one LED element, thereby enabling light emitted by the at least one LED element to enter the light guide plate through the light incident surface and to exit from the light guide plate through the light emitting surface;
wherein the light exiting from the light guide plate through the light-emitting surface is directly emitted onto the opaque surface of the light-receiving object.

7. The cove lighting module of claim 6, further comprising at least one reflective plate, wherein the at least one reflective plate is disposed adjacent to the at least one light guide plate to reflect the light emitted by the at least one light emitting diode element back to the at least one light guide plate.

8. The cove lighting module of claim 6, wherein the light-receiving object is a wall or a ceiling of a building.

9. The cove lighting module of claim 6, wherein a refractive index of the at least one light guide plate is greater than 1, and the at least one light guide plate is formed from transparent material having a transmittance greater than 0.7.

10. The cove lighting module of claim 6, wherein the at least one light guide plate has a plurality of pixel regions, and an angle between a direction of a main emitting light of each of the pixel regions and a normal of the light emitting surface of the light guide plate is greater than 0.

11. The cove lighting module of claim 10, wherein the angle is greater than 45 degrees.

12. The cove lighting module of claim 6, wherein the at least one light guide plate has a reflective surface opposite to the light emitting surface, and the reflective surface has a plurality of microstructures, and each of the micro structures is a concave structure or a convex structure, and a size of each of the microstructures is smaller than 500 um².
